# EUROPEAN PATENT SPECIFICATION

(11) **EP 3 130 461 B1**
(45) Date of publication and mention of the grant of the patent: **19.08.2020**
(21) Application number: 15776370.7
(22) Date of filing: 09.04.2015
(51) Int. Cl.: B32B 27/12, B32B 37/12, B32B 5/02, B32B 5/08, B32B 7/02, B32B 15/082, B32B 15/085, B32B 15/088, B32B 15/09, B32B 15/14, B32B 27/30, B32B 15/18

(54) **COMPOSITE FILM AND METHOD FOR MANUFACTURING SAME**
VERBUNDFOLIE UND VERFAHREN ZUR HERSTELLUNG DAVON
FILM COMPOSITE ET SON PROCÉDÉ DE FABRICATION

(30) Priority: 10.04.2014 KR 20140043206
(43) Date of publication of application: 15.02.2017
(73) Proprietor: Jenax Inc., Busan 614-865 (KR)
(72) Inventor: SHIN, Lee Hyun, Busan 157-882 (KR); KIM, Chang Hyeon, Gongju-si Chungcheongnam-do 314-923 (KR); SHIN, Eun Jung, Seongnam-si Gyeonggi-do 463-727 (KR)
(74) Representative: Platzöder, Michael Christian
(86) International application number: PCT/KR2015/003573
(87) International publication number: WO 2015/156619

(56) References cited:
- WO-A2-2008/039658
- CN-U- 202 847 031
- JP-U- H 074 032
- KR-A- 20070 005 339
- KR-B1- 0 138 556
- KR-B1- 100 995 544
- KR-B1- 100 995 544
- KR-B1- 101 363 008
- US-A1- 2004 097 157

## Description

### TECHNICAL FIELD

The present invention relates to a composite film of a battery casing and a method of fabricating the same, and more particularly, to a highly flexible composite film with reduced interlayer deformation or interlayer exfoliation and a method of fabrication the same.

### BACKGROUND ART

Generally, a pouch or a packing material for accommodating a liquid therein is demanded to prevent the liquid therein from being leaked to outside and to prevent outside moisture or foreign substances from being introduced into the same. A polymer resin is commonly used for such a pouch or a packing material. Such a polymer resin may be drawn or folded by a press to have a certain shape, e.g., a rectangular shape or a circular shape, and may be applied to various product packing materials.

Although a polymer resin for a pouch or a packing material in the related art becomes a thick film or a highly dense layer to prevent a liquid from being leaked to outside and to prevent outside moisture or foreign substances from being introduced into the same, such an approach restricts improvement of flexibility or pliability of the packing material. Furthermore, in case of forming a composite structure by stacking other layers, various deformations or exfoliations may occur due to different thermal expansion coefficients. The general technical background of the invention also includes KR 100 995 544 B1.

### DETAILED DESCRIPTION OF THE INVENTION

### TECHNICAL PROBLEM

The present invention provides a composite film of a battery casing that is sufficient flexible or pliable, prevents a liquid therein from being leaked to outside by reducing interlayer deformation or interlayer exfoliation, and prevents outside moisture or foreign substances from being introduced into the same.

The present invention also provides a method of economically and easily fabricating the above-stated composite film.

### TECHNICAL SOLUTION

According to an aspect of the present invention, there is provided a composite film of a battery casing as defined in the appended claims 1-11.

According to another aspect of the present invention, there is provided a method of fabricating a composite film of a battery casing as defined in the appended claims 12-15.

### ADVANTAGEOUS EFFECTS

According to an embodiment of the present invention, by laminating a fabric layer onto a surface of a protection layer (basic material layer) constituting a composite file, there are provided a composite film having excellent flexibility or pliability, and capable of improving life expectancy and product reliability of a packing material by reducing interlayer deformation or interlayer exfoliation due to a difference between thermal expansion coefficients of the basic material layer and the fabric layer and a method of fabricating the composite film.

Furthermore, according to an embodiment of the present invention, there may be provided a composite film, since it is difficult for a liquid, such as an electrolyte, and outside moisture to be introduced into a protection layer (basic material layer), a fabric layer is exposed as an outer casing in case of using the composite film as an outer casing for a lithium ion battery including an electrolyte or a pouch for accommodating an energy storage device, such as a capacitor or a double-layered capacitor, and a method of fabricating the composite film.

Furthermore, according to an embodiment of the present invention, there may be provided a highly flexible composite film, which employs a highly water-resistant basic material layer and a fabric layer so as to be used as outer casings for wearable smart devices including a watch, a belt, an eyeglass, and a battery, a battery including the outer casing, and a method of fabricating the same.

### DESCRIPTION OF THE DRAWINGS

FIG. 1 is a sectional view of a composite film according to an embodiment of the present invention.
FIG. 2 is a sectional view of a composite film according to another embodiment of the present invention.
FIG. 3 is a sectional view of a composite film according to another embodiment of the present invention.
FIG. 4 is a flowchart for describing a method of fabricating the composite film according to an embodiment of the present invention.
FIG. 5 is a flowchart for describing a method of fabricating the composite film according to another embodiment of the present invention.
FIG. 6 is a flowchart for describing a method of fabricating the composite film according to another embodiment of the present invention.
FIG. 7 is a flowchart for describing a method of fabricating the composite film according to another embodiment of the present invention.
FIG. 8 is an exploded perspective view of an outer battery casing according to an embodiment of the present invention and a battery including the same.

### BEST MODE

Hereinafter, exemplary embodiments will be described in detail with reference to accompanying drawings. The invention may, however, be embodied in many different forms and should not be construed as being limited to the embodiments set forth herein; rather, these embodiments are provided so that this disclosure will be thorough and complete, and will fully convey the concept of the invention to those skilled in the art.

Furthermore, in the drawings, the thicknesses of layers and regions are exaggerated for clarity, and like reference numerals in the drawings denote like elements. As used herein, the term "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although numerical terms (e.g., "first" and "second") are used herein to describe various members, parts, regions, layers and/or sections, these members, parts, regions, layers and/or sections are not to be limited by these terms. These terms are only used to distinguish one member, part, region, layer or section from another member, part, region, layer or section. Thus, for example, a first member, part, region, layer or section discussed below could be termed a second, part, region, layer or section without departing from the teachings of the illustrated embodiments.

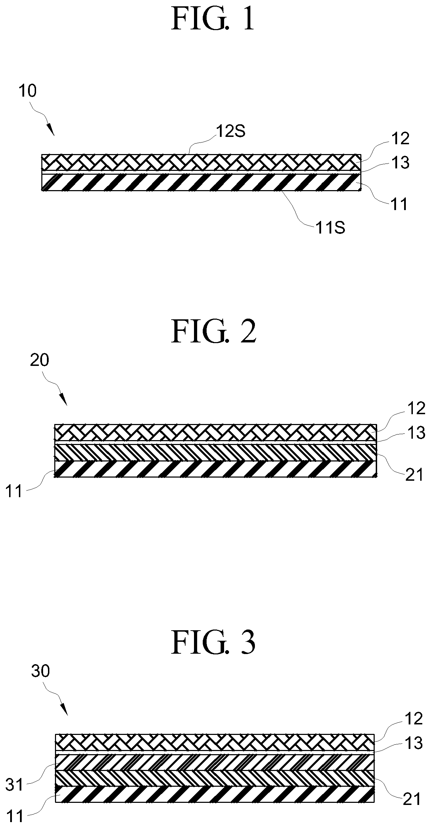

FIG. 1 is a sectional view of a composite film 10 according to an embodiment of the present invention.

Referring to FIG. 1, the composite film 10 include an first protection sheet layer 11 and an fabric sheet layer 12 that is adhered onto the first protection sheet layer 11 via an adhesive layer 13. The first protection sheet layer 11 may be a thermal fusing layer. Exposed bottom surfaces 11S of the first protection sheet layer 11 may be arranged to face each other by stacking the composite film 10 and may be thermally fused to each other. Alternatively, the first protection sheet layer 11 may be placed on another substrate and the first protection sheet layer 11 may be fused onto the substrate by applying heat thereto.

The thermal fusing layer may comprise a polypropylene-based polymer resin, a polyethylene-based polymer resin, or a copolymer thereof (e.g., an ethylene-propylene copolymer) and may preferably comprise a polyethylene-based polymer resin or a copolymer thereof. Since the polyethylene-based polymer resin features lower melting point than the polypropylene-based polymer resin, a thermal fusion operation may be performed thereto at a relatively low temperature, e.g., a temperature from about 80°C to about 130°C.

According to an embodiment of the present invention, the polyethylene-based polymer resin may comprise polyethylene (PE), low-density polyethylene (LDPE), linear low-density polyethylene (LLDPE), mid-density polyethylene (MDPE), or high-density polyethylene (HDPE). According to another embodiment of the present invention, the polyethylene-based polymer resin may be a polyethylene copolymer containing ethylene vinyl acetate copolymer (EVA), acrylic acid-ethylene copolymer (EAA), metacrylic acid-ethylene copolymer (EMAA), acrylic acid ethyl-ethylene copolymer (EEA), acrylic acid methyl-ethylene copolymer (EMA), or metacrylic acid-ethylene copolymer (EMMA). Thermal conductivity of a polyethylene-based polymer resin with a low melting point is reduced due to the fabric sheet layer 12 and, even if thickness of a composite film increases, thermal fusion may be performed or a packing material may be sealed at a relatively low temperature, and thus reliability and speed of a packing operation using the composite film 10 may be improved. According to an embodiment of the present invention, the composite film 10 may be used as an outer casing of a battery that may be fabricated at a low temperature.

The above-stated materials related to the first protection sheet layer 11 are merely examples, and the present invention is not limited thereto. For example, the first protection sheet layer 11 may comprise materials that may be thermally fused while being stable against moisture or an electrolyte, that is, a polyester-based resin, such as PET resin or nylon resin, or a polyamide-based resin.

The first protection sheet layer 11 may have a thickness from about 10 µm to about 40 µm. If thickness of the first protection sheet layer 11 is less than 10 µm, chemical resistance and leakage related to content, such as a salt or an electrolyte, occur and an outside moisture blocking characteristic is deteriorated. Furthermore, during a packing operation or a packaging operation using the composite film 10, adhesion thickness based on thermal fusion between bottom surfaces of the first protection sheet layer 11 is reduced, and thus sufficient mechanical strength and sealing characteristic cannot be maintained. If thickness of the first protection sheet layer 11 exceeds 40 µm, it is difficult to draw or fold the composite film 10 during a packing operation or a packaging operation and, due to the increased thickness of the composite film 10, flexibility thereof is deteriorated.

The fabric sheet layer 12 protects internal layers including the first protection sheet layer 11 from the outside environment, prevents the internal layers from being cracked based on flexibility of fibrous structure of the fabric sheet layer 12, and prevents an outer circumferential surface 12S of the composite film 10 (e.g., the outer circumferential surface is an outer skin of a pouch) from being cracked, thereby improving life expectancy of a product and securing durability and reliability of the composite film 10 during a drawing operation or a folding operation for a packing operation or a packaging operation. Furthermore, the fabric sheet layer 12 improves flexibility of the composite film 10 based on unique characteristics of a fiber structure thereof and absorbs and compensates deformation or interlayer exfoliation due to stresses based on a difference between thermal expansion coefficients of the internal layers and the fabric sheet layer 12 or, if the internal layers includes a plurality of stacked layers, stresses based on different thermal expansion coefficients of the internal layers, thereby maintaining structure of the composite film 10 stable.

Furthermore, when the fabric sheet layer 12 is used as a packing material, an interface exhibiting flexibility and a user-friendly texture or a user-friendly tactile impression may be embodied, thereby improving marketability and expanding possible applications thereof. For example, if the composite film 10 is applied as an outer casing of a wearable device, such as a smart cloth or a smart shoe, or is used as a pouch for a battery that is an energy supply of the wearable device, the composite film 10 may be attached to or integrated with existing clothes, existing shoes, existing bags, or existing camping equipments as an outer casing without a separate outer casing. Therefore, enabling development of products based on applications thereof and products with new dimensions and designs.

According to an embodiment of the present invention, the fabric sheet layer 12 may comprise a cotton fabric, a hempen fabric, a woolen fabric, a silk fabric, a blended fabric, a union fabric, a non-woven fabric, or a microfiber fabric. According to another embodiment of the present invention, the fabric sheet layer 12 may be a composite fiber layer. For example, the fabric sheet layer 12 may include a Gore-Tex formed by stacking a waterproof layer on a fabric layer. However, the above-stated materials are merely examples, and the present invention is not limited thereto. For example, the fabric sheet layer 12 may include any material layer that may be formed by being placed on the first protection sheet layer 11 with the adhesive layer 13 and being dried at a temperature including the room temperature (e.g., 25°C), the temperature from about 20°C to about 50°C or being pressed by a press. The above-stated operations for stacking the fabric sheet layer 12 are merely examples, and the present invention is not limited thereto.

The fabric sheet layer 12 may be formed to have a thickness from about 100 µm to about 2,000 µm. If thickness of the fabric sheet layer 12 is less than about 100 µm, the fabric sheet layer 12 may be easily damaged by external shocks or may not be able to sufficiently suppress interlayer deformation or interlayer exfoliation based on differences between thermal expansion coefficients, and thus the fabric sheet layer 12 is not suitable as an outer casing. Furthermore, if thickness of the fabric sheet layer 12 exceeds 2,000 µm, it is difficult to draw or fold the composite film 10 in a packing operation using the composite film 10, e.g., an operation for fabricating a pouch, and thus increased processing cost and defects may be caused. Since thickness of the composite film 10 is increased, flexibility thereof may be deteriorated.

The adhesive 13 may be an acryl-based adhesive or an epoxy-based adhesive. However, the present invention is not limited thereto. The adhesive 13 may not only adheres the fabric sheet layer 12 to the first protection sheet layer 11, but also has certain elasticity to prevent the first protection sheet layer 11 and the fabric sheet layer 12 from being detached from each other when the composite film 10 is drawn or folded.

FIG. 2 is a sectional view of a composite film 20 according to another embodiment of the present invention.

Referring to FIG. 2, the composite film 20 may include an first protection sheet layer 11, an metal sheet layer 21 formed on the first protection sheet layer 11, and an fabric sheet layer 12 adhered to the metal sheet layer 21 via an adhesive layer 13. The descriptions given above may be referred to regarding components of FIG. 2 denoted by the same reference numerals as the components of FIG. 1.

The metal sheet layer 21 prevents the first protection sheet layer 11 from being swelled or deteriorated by moisture or a gas introduced into the first protection sheet layer 11 from outside environment. Furthermore, in a packing operation or a packaging operation, if content is a liquid material, e.g., an electrolyte, the metal sheet layer 21 prevents the content from being leaked via the first protection sheet layer 11 and maintains strength of an overall package.

The metal sheet layer 21 may comprise aluminum (Al), copper (Cu), iron (Fe), carbon (C), chromium (Cr), manganese (Mn), nickel (Ni), or an alloy thereof. For example, the metal sheet layer 21 may include iron for improving mechanical strength and may include an iron as a main ingredient for improving flexibility. If the metal sheet layer 21 includes an iron-containing material, an alloy including from 84% to 88.2% iron, less than or equal to 0.5% carbon, from 11% to 15% chromium, and from 0.3% to 0.5% manganese or an alloy including from 63.7% to 75.9% iron, from 0.1% to 0.3% carbon, from 12% to 18% chromium, and from 7% to 12% nickel may be used.

Thickness of the metal sheet layer 21 may be from about 0.1 µm to about 100 µm and may preferably be from about 1 µm to about 20 µm. If thickness of the metal sheet layer 21 is smaller than 0.1 µm, the metal sheet layer 21 may be easily cracked, broken, or damaged in a drawing operation or a folding operation for a packing operation or a packaging operation. If thickness of the metal sheet layer 21 exceeds 100 µm, it is difficult to draw or fold the metal sheet layer 21. Therefore, it is difficult to perform a packing operation or a packaging operation, and flexibility of a packed product and life expectancy thereof may be deteriorated.

The metal sheet layer 21 may be a metal foil or a metal thin-film. In case of the metal foil, an intermediate product for fabricating the composite film 20 may be formed by coating or laminating the first protection sheet layer 11 on a surface of the metal sheet layer 21. In case of the metal thin-film, the metal sheet layer 21 may be formed on the first protection sheet layer 11 via a vapor deposition operation, such as sputtering or thermal deposition, an electrolyteless plating operation, or a combination thereof.

If the metal sheet layer 21 is the thin-film, the metal sheet layer 21 may increase flexibility or pliability of the composite film 20. Thickness of the metal sheet layer 21 is within a range from about 0.1 µm to about 10 µm. The composite film 10, which is a thin-film of the metal sheet layer 21, is useful when the composite film 10 as described above is used as an outer battery casing for a battery including a solid electrolyte. Unlike a battery employing a liquid electrolyte, an electrolyte is unlikely be leaked out of an outer battery casing in a battery employing a solid electrolyte, and thus the metal sheet layer 21 may be formed as a thin-film or omitted.

The fabric sheet layer 12 is adhered onto the metal sheet layer 21 via the adhesive 13. The fabric sheet layer 12 increases flexibility and pliability of the composite film 20, thereby increasing flexibility and pliability of a packing material or a package employing the composite film 20 as an outer casing. For example, if the composite film 20 is used as an outer casing for a water bottle or a battery cell charged with an electrolyte, the composite film 20 may reduce swelling of the first protection sheet layer 11 due to the electrolyte and exfoliation and deformation due to a difference between thermal expansion coefficients of the first protection sheet layer 11 and the metal sheet layer 21, thereby improving life expectancy of a product.

FIG. 3 is a sectional view of a composite film 30 according to another embodiment of the present invention.

Referring to FIG. 3, the composite film 30 includes a first protection layer 11, a metal layer 21 on the first protection layer 11, a second protection layer 31 on the metal layer 21, and a fabric layer 12 adhered onto the second protection layer 31 via an adhesive 13. Since the composite film 30 of FIG. 3 has a structure similar to that of the composite film 20 of FIG. 2, descriptions below will focus on differences therebetween.

The second protection layer 31 may be formed by being coated or laminated onto a surface of the metal layer 21 to a certain thickness. The second protection layer 31 protects internal layers from outside and prevents the outer circumferential surface of a pouch formed of the composite film 10 from being cracked, and thus the overall fabricating process becomes easy.

The second protection layer 31 may include nylon, polyethylene, polyethylene terephthalate, polybutylene terephthalate, polybutylene naphthalate, or a derivative thereof. However, the present invention is not limited thereto. The second protection layer 31 may be formed by coating the liquefied polymer resin onto a surface of the metal layer 21 or forming films of the polymer resin in advance and stacking the films by using any of various laminating methods. Furthermore, a surface of the second protection layer 31 may be protected or formability of the second protection layer 31 may be improved by forming the second protection layer 31 to include a plurality of layers or forming a fluorine-based resin layer or an acryl-based resin layer on a surface of the second protection layer 31.

The second protection layer 31 may be formed to have a thickness from about 10 µm to about 30 µm. If thickness of the second protection layer 31 is smaller than 10 µm, it is difficult to perform a drawing operation or a folding operation for a packing operation or a packaging operation. If thickness of the second protection layer 31 exceeds 30 µm, a packing material employing the composite film 10 becomes too thick.

Hereinafter, a method of fabricating a composite film according to an embodiment of the present invention will be described. Since materials and thicknesses are identical to those described above, detailed descriptions thereof will be omitted.

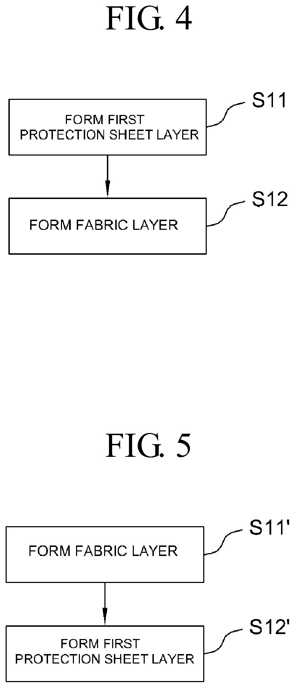

FIG. 4 is a flowchart for describing a method of fabricating the composite film 10 according to an embodiment of the present invention, and FIG. 5 is a flowchart for describing a method of fabricating the composite film 10 according to another embodiment of the present invention. FIG. 1 will also be referred to in the descriptions below.

Referring to FIG. 4, a method of fabricating the composite film 10 according to an embodiment of the present invention may comprise a step of forming a first protection layer (operation S11) and a step of forming a fabric layer (operation S12). According to the present invention, the fabric layer 12 may be formed directly on the first protection layer 11 via the adhesive 13 without the metal layer 21.

Referring to FIG. 5, a method of fabricating the composite film 10 according to another embodiment of the present invention may comprise a step of forming a fabric layer (operation S11') and a step of forming a first protection layer (operation S12'). The first protection layer 11 may be formed directly on the fabric layer 12 without the metal layer 21. Here, the first protection layer 11 may be formed directly on the fabric layer 12 by using a coating method or a laminating method.

According to some embodiments, in case of the laminating method, the first protection layer 11 and the fabric layer 12 may be rapidly and firmly adhered to each other by using a pressing method using a press. The composite film 10 without the metal layer 21 is useful when the composite film 10 as described above is used as an outer battery casing for a battery including a solid electrolyte, for example. Unlike a battery employing a liquid electrolyte, an electrolyte is unlikely be leaked out of an outer battery casing in a battery employing a solid electrolyte, and thus the composite film 10 without the metal layer 21 may be fabricated as an outer battery casing as described above.

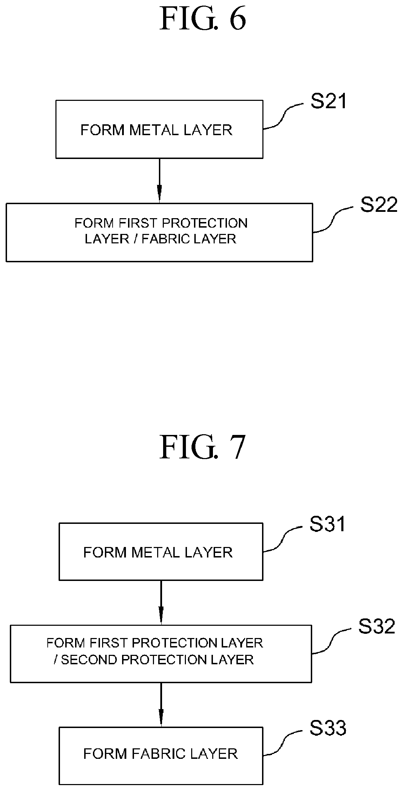

FIG. 6 is a flowchart for describing a method of fabricating the composite film 20 according to another embodiment of the present invention. Here, FIG. 2 will also be referred to in the descriptions below.

Referring to FIG. 6, a method of fabricating the composite film 20 according to an embodiment of the present invention comprises a step of forming a metal layer (operation S21) and a step of forming a first protection layer and a fabric layer (operation S22). In the step S21 for forming the metal layer 21, a basic material is formed as a foil of a desired thickness by applying a common forming operation to the basic material, where an additional operation, such as a heat treatment, may be performed in an inert gas atmosphere to prevent the metal layer 21 from being cracked when the metal layer 21 is drawn or folded and to improve elongation of the metal layer 21. In the step S22 for forming the first protection layer 11 and the fabric layer 12, the first protection layer 11 is coated or laminated onto a surface of the metal layer 21, and then the fabric layer 12 is adhered to the other surface of the metal layer 21 by using the adhesive 13. Here, the fabric layer 12 may be formed after the first protection layer 11 is formed or the first protection layer 11 may be formed after the fabric layer 12 is formed. According to another embodiment of the present invention, the first protection layer 11 and the fabric layer 12 may be simultaneously formed.

The metal layer 21 may be formed as a metal thin-film of a desired thickness by performing a sputtering operation or a plating operation to a surface of the first protection layer 11. The first protection layer 11 is provided first, and then the fabric layer 12 may be adhered to a surface of the metal layer 21, which is the surface without the first protection layer 11, via the adhesive 13. The fabric layer 12 may be located on a surface of the metal layer 21 via the adhesive 13 and may be formed by being dried at the room temperature or being pressed by a press at a certain pressure.

FIG. 7 is a flowchart for describing a method of fabricating the composite film 30 according to another embodiment of the present invention. Here, FIG. 3 will also be referred to in the descriptions below.

Referring to FIG. 7, a method of fabricating the composite film 30 according to another embodiment of the present invention comprises a step of forming a metal layer (operation S31), for a step of forming a first protection layer and a second protection layer (operation S32), and for a step of forming a fabric layer (operation S33).

In the operation S32 for forming the first protection layer 11 and the second protection layer 31, the first protection layer 11 may be formed on a surface of the metal layer 21, and then the second protection layer 31 may be formed on the other surface of the metal layer 21. Selectively, the second protection layer 31 may be formed on a surface of the metal layer 21, and then the first protection layer 11 may be formed on the other surface of the metal layer 21. As described above, the first protection layer 11 and the second protection layer 31 may be formed on the respective surfaces of the metal layer 21 by being coated or laminated. In the step S33 for forming the fabric layer 12, the fabric layer 12 may be arranged on the second protection layer 31 via the adhesive 13 and may be dried at the room temperature or may be pressed by using a press.

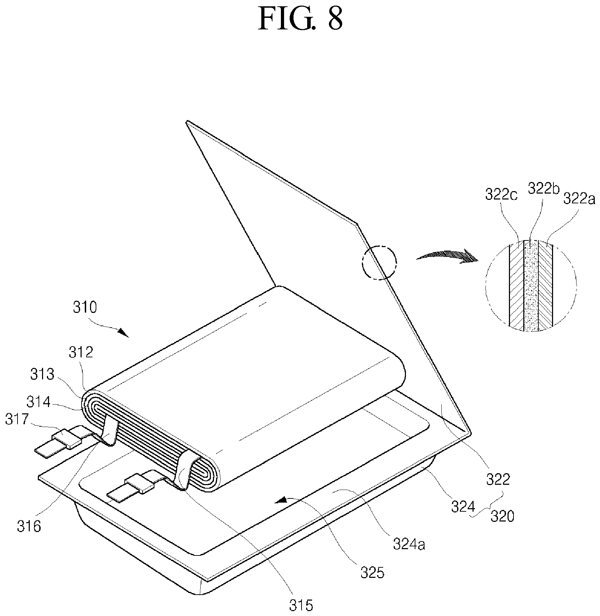

FIG. 8 is an exploded perspective view of an outer battery casing 320 according to an embodiment of the present invention and a battery including the same.

Referring to FIG. 8, the outer battery casing 320 according to an embodiment of the present invention comprises an outer casing main body 324 having formed therein a space unit 325 for accommodating an electrode assembly 310 and an outer casing cover 322 including at least one side contacting the outer casing main body 324. Sealing units 324a for attachment to the outer casing cover 322 are formed along three sides of the outer casing main body 324 other than the side integrally connected to the outer casing cover 322.

For example, the outer battery casing 320 may comprise a fabric layer 322a, a metal layer 322b, and a first protection layer 322c like the composite films described above. The fabric layer 322a forms an outer packing casing of a battery, whereas the first protection layer 322c is a thermal fusing layer and forms an inner packing casing of the battery. If the sealing unit 324a is thermally fused when the outer casing main body 324 and the outer casing cover 322 closely contact each other, first protection layers (thermal fusing layers) of the sealing unit 324a are adhered to each other, and thus the outer battery casing is sealed. The composite films according to the various embodiments as described above, e.g., a film having a first protection layer/fabric layer structure, a film having a first protection layer/metal layer/second protection layer/fabric layer structure, etc., may be applied to the above-stated layer structure, where the descriptions given above may be referred to.

The electrode assembly 310 may be fabricated as a jelly-roll type assembly by winding a first electrode 312, a second electrode 314, and a separator 313 interposed therebetween or a plate-like stacked electrode assembly by stacking the first electrode 312, the separator 313, and the second electrode 314. The first electrode 312 and the second electrode 314 have polarities opposite to each other, and each of the first electrode 312 and the second electrode 314 may correspond to a positive electrode or a negative electrode. The first electrode 312 and the second electrode 314 include a current collector and an electrode active material applied onto at least one surface of the current collector, that is, a positive electrode active material or a negative electrode active material. Alternatively, the first electrode 312 and the second electrode 314 may have an electrode structure as disclosed in Korean Patent No. 1088073 filed by the present applicant on October 16, 2010. However, the above-stated structures are merely examples, and the present invention is not limited thereto.

If the first electrode 312 of the second electrode 314 is used as a positive electrode, a current collector thereof may be formed of a stainless steel, nickel, aluminum, titanium, an alloy thereof, or aluminum or a stainless steel surface-treated by using carbon, nickel, titanium, or silver. Preferably, the current collector may be formed of aluminum or an aluminum alloy. If the first electrode 312 of the second electrode 314 is used as a negative electrode, a current collector thereof may be formed of a stainless steel, nickel, copper, titanium, an alloy thereof, or copper or a stainless steel surface-treated by using carbon, nickel, titanium, or silver. Preferably, the current collector may be formed of copper or a copper alloy.

Generally, a positive electrode active material may be any one of lithium-containing transition metal oxides and lithium chalcogenide compounds, where the most popular examples thereof may be metal oxides including LiCoO₂, LiNiO₂, LiMnO₂, LiMn₂O₄, or LiNi_{1-x-y}CoₓM_{y}O2 (0 = x = 1, 0 = y = 1, 0 = x+y = 1, M is a metal, such as Al, Sr, Mg, and La). A negative electrode active material may be a carbon material, such as crystalline carbon, amorphous carbon, carbon complex, and carbon fibers, lithium, and a lithium alloy. The separator 313 prevents short-circuit between the first electrode 312 and the second electrode 314 and provides a path for lithium ion movements and may be a layer known in the art, e.g., a polyolefin-based polymer layer, such as polypropylene and polyethylene, or multi-layers, a micro-porous film, a woven fabric, and a non-woven fabric thereof.

A first electrode tab 315 and a second electrode tab 316 are attached to the first electrode 312 and the second electrode 314 of the electrode assembly 310 by being welded to the second electrode 314 and the second electrode 314 via laser welding, ultrasound welding, or resistant welding or by being adhered to the second electrode 314 and the second electrode 314 via a conductive adhesive to be electrically transmissive. The first electrode tab 315 and the second electrode tab 316 are formed to protrude from the electrode assembly 310 in directions in which the electrode assembly 310 is wound.

The first electrode tab 315 and the second electrode tab 316 of the electrode assembly 310 may be drawn via a sealing unit 324a opposite to the side of line connected to the outer casing main body 324 and the outer casing cover 322 in the sealing unit 324a. Protective tapes 317 formed of an insulation material are attached to the electrode tabs 315 and 316 to prevent short-circuit therebetween.

Although not shown, a protection circuit module may be electrically connected to the first electrode tab 315 and the second electrode tab 316 to prevent overcharging and overdischarging of a battery and keep the battery from a dangerous state in the event of an external short-circuit. It should be understood that the outer battery casing and a battery employing the same are also included in embodiments of the present invention.

## Claims

1. A composite film of a battery casing comprising:
a first protection layer;
**characterized by**
a fabric layer, in particular a non-woven fabric layer, adhered onto the first protection layer via an adhesive layer,
wherein the first protection layer comprises a material that is capable of being thermally fused,
wherein the first protection layer is an inner packing casing of the battery,
wherein the fabric layer has flexibility to resolve stresses based on a difference between a thermal expansion coefficient of the first protection layer and the fabric layer, so as to prevent the first protection layer from being cracked, and
wherein the fabric layer is an outer packing casing to provide an outer exposed interface to a user.

2. The composite film of claim 1, wherein the first protection layer comprises a polypropylene-based polymer resin, a polyethylene-based polymer resin, a copolymer thereof, or a mixture thereof.

3. The composite film of claim 2, wherein the polyethylene-based polymer resin comprises a polyethylene copolymer containing ethylene vinyl acetate copolymer (EVA), acrylic acid-ethylene copolymer (EAA), metacrylic acid-ethylene copolymer (EMAA), acrylic acid ethyl-ethylene copolymer (EEA), acrylic acid methyl-ethylene copolymer (EMA), or metacrylic acid-ethylene copolymer (EMMA).

4. The composite film of claim 1, wherein the first protection layer has a thickness from about 10 µm to about 40 µm.

5. The composite film of claim 1, wherein the fabric layer comprises a cotton fabric, a hempen fabric, a woolen fabric, a silk fabric, a blended fabric, a union fabric, a non-woven fabric, or a microfiber fabric.

6. The composite film of claim 1, wherein the fabric layer has a thickness from about 100 µm to about 2,000 µm.

7. The composite film of claim 1, further comprising a metal layer between the first protection layer and the fabric layer,
wherein the metal layer comprises aluminum (Al), copper (Cu), iron (Fe), carbon (C), chromium (Cr), manganese (Mn), nickel (Ni), or an alloy thereof.

8. The composite film of claim 7, wherein the metal layer comprises a metal foil or a metal thin-film.

9. The composite film of claim 7, wherein the metal layer has a thickness from about 0.1 µm to about 100 µm.

10. The composite film of claim 7, further comprising a second protection layer between the metal layer and the fabric layer.

11. The composite film of claim 10, wherein the second protection layer comprises nylon, polyethylene, polyethylene terephthalate, polybutylene terephthalate, polybutylene naphthalate, and a derivative thereof.

12. A method of fabricating a composite film of a battery casing, the method comprising:
providing a first protection layer;
**characterized by**
laminating a fabric layer, in particular a non-woven fabric layer, on a surface of the first protection layer,
wherein the first protection layer comprises a material that is capable of being thermally fused,
wherein the first protection layer is an inner packing casing of the battery,
wherein the fabric layer has flexibility to resolve stresses based on a difference between a thermal expansion coefficient of an internal layer including the first protection layer and the fabric layer, so as to prevent the first protection layer from being cracked, and
wherein the fabric layer is an outer packing casing to provide an outer exposed interface to a user.

13. The method of claim 12, further comprising, before the forming of the fabric layer, forming a second protection layer on the other surface of the metal layer,
wherein the fabric layer is formed on the other surface of the second protection layer not contacting the metal layer.

14. The method of claim 13, wherein the forming of the fabric layer comprises applying an adhesive on the other surface of the second protection layer, stacking the fabric layer thereon, and drying the fabric layer.

15. The method of claim 12, wherein the fabric layer is formed on the first protection layer or the first protection layer is formed on the fabric layer.

## Patentansprüche

1. Verbundfolie eines Batteriegehäuses, aufweisend:
eine erste Schutzschicht;
**gekennzeichnet durch**
eine Gewebeschicht, insbesondere eine Vliesstoffschicht, die über eine Klebeschicht an der ersten Schutzschicht haftet,
wobei die erste Schutzschicht ein Material aufweist, das thermisch schmelzbar ist,
wobei die erste Schutzschicht eine innere Ummantelung der Batterie ist,
wobei die Gewebeschicht flexibel ist, um Spannungen auszugleichen, die auf einer Differenz zwischen einem Wärmeausdehnungskoeffizienten der ersten Schutzschicht und der Gewebeschicht beruhen, um so zu verhindern, dass die erste Schutzschicht Risse bekommt, und
wobei die Gewebeschicht eine äußere Ummantelung ist, um eine äußere freiliegende, für einen Benutzer zugängliche Grenzfläche bereitzustellen.

2. Verbundfolie nach Anspruch 1, wobei die erste Schutzschicht ein Polymerharz auf Polypropylenbasis, ein Polymerharz auf Polyethylenbasis, ein Copolymer davon oder eine Mischung davon aufweist.

3. Verbundfolie nach Anspruch 2, wobei das Polymerharz auf Polyethylenbasis ein Polyethylen-Copolymer aufweist, das Ethylen-Vinylacetat-Copolymer (EVA), Acrylsäure-Ethylen-Copolymer (EAA), Metacrylsäure-Ethylen-Copolymer (EMAA), Acrylsäure-Ethyl-Ethylen-Copolymer (EEA), Acrylsäure-MethylEthylen-Copolymer (EMA) oder Metacrylsäure-Ethylen-Copolymer (EMMA) enthält.

4. Verbundfolie nach Anspruch 1, wobei die erste Schutzschicht eine Dicke von etwa 10 µm bis etwa 40 µm hat.

5. Verbundfolie nach Anspruch 1, wobei die Gewebeschicht ein Baumwollgewebe, ein Hanfgewebe, ein Wollgewebe, ein Seidengewebe, ein Mischgewebe, ein Uniongewebe, einen Vliesstoff oder ein Mikrofasergewebe aufweist.

6. Verbundfolie nach Anspruch 1, wobei die Gewebeschicht eine Dicke von etwa 100 µm bis etwa 2.000 µm hat.

7. Verbundfolie nach Anspruch 1, die ferner eine Metallschicht zwischen der ersten Schutzschicht und der Gewebeschicht aufweist,
wobei die Metallschicht Aluminium (AI), Kupfer (Cu), Eisen (Fe), Kohlenstoff (C), Chrom (Cr), Mangan (Mn), Nickel (Ni) oder eine Legierung davon aufweist.

8. Verbundfolie nach Anspruch 7, wobei die Metallschicht eine Metallfolie oder einen dünnen Metallfilm aufweist.

9. Verbundfolie nach Anspruch 7, wobei die Metallschicht eine Dicke von etwa 0,1 µm bis etwa 100 µm hat.

10. Verbundfolie nach Anspruch 7, die ferner eine zweite Schutzschicht zwischen der Metallschicht und der Gewebeschicht aufweist.

11. Verbundfolie nach Anspruch 10, wobei die zweite Schutzschicht Nylon, Polyethylen, Polyethylenterephthalat, Polybutylenterephthalat, Polybutylennaphthalat und ein Derivat davon aufweist.

12. Verfahren zur Herstellung einer Verbundfolie eines Batteriegehäuses, wobei das Verfahren aufweist:
Bereitstellen einer ersten Schutzschicht;
**gekennzeichnet durch**
Laminieren einer Gewebeschicht, insbesondere einer Vliesstoffschicht, auf eine Oberfläche der ersten Schutzschicht,
wobei die erste Schutzschicht ein Material aufweist, das thermisch schmelzbar ist,
wobei die erste Schutzschicht eine innere Ummantelung der Batterie ist,
wobei die Gewebeschicht flexibel ist, um Spannungen auszugleichen, die auf einer Differenz zwischen einem Wärmeausdehnungskoeffizienten einer inneren Schicht, welche die erste Schutzschicht beinhaltet, und der Gewebeschicht beruhen, um so zu verhindern, dass die erste Schutzschicht Risse bekommt, und
wobei die Gewebeschicht eine äußere Ummantelung ist, um eine äußere freiliegende, für einen Benutzer zugängliche Grenzfläche bereitzustellen.

13. Verfahren nach Anspruch 12, das ferner vor dem Bilden der Gewebeschicht das Bilden einer zweiten Schutzschicht auf der anderen Oberfläche der Metallschicht aufweist,
wobei die Gewebeschicht auf der anderen Oberfläche der zweiten Schutzschicht gebildet wird, welche die Metallschicht nicht berührt.

14. Verfahren nach Anspruch 13, wobei das Bilden der Gewebeschicht das Auftragen eines Klebstoffs auf die andere Oberfläche der zweiten Schutzschicht, das Stapeln der Gewebeschicht darauf und das Trocknen der Gewebeschicht aufweist.

15. Verfahren nach Anspruch 12, wobei die Gewebeschicht auf der ersten Schutzschicht gebildet wird oder die erste Schutzschicht auf der Gewebeschicht gebildet wird.

## Revendications

1. Film composite d'un boîtier de batterie comprenant :
une première couche de protection ;
**caractérisé par**
une couche d'étoffe, en particulier une couche d'étoffe non tissée, mise à adhérer sur la première couche de protection via une couche d'adhésif,
dans lequel la première couche de protection comprend un matériau qui est capable d'être fusionné thermiquement,
dans lequel la première couche de protection est un boîtier d'emballage interne de la batterie,
dans lequel la couche d'étoffe présente une flexibilité pour résoudre des contraintes basées sur une différence entre un coefficient de dilatation thermique de la première couche de protection et la couche d'étoffe, de façon à empêcher la première couche de protection de se fissurer, et
dans lequel la couche d'étoffe est un boîtier d'emballage externe pour fournir une interface exposée externe à un utilisateur.

2. Film composite selon la revendication 1, dans lequel la première couche de protection comprend une résine de polymère à base de polypropylène, une résine de polymère à base de polyéthylène, un copolymère de celles-ci, ou un mélange de celles-ci.

3. Film composite selon la revendication 2, dans lequel la résine de polymère à base de polyéthylène comprend un copolymère de polyéthylène contenant un copolymère d'éthylène-acétate de vinyle (EVA), un copolymère d'acide acrylique-éthylène (EAA), un copolymère d'acide méthacrylique-éthylène (EMAA), un copolymère d'acide acrylique-éthyl-éthylène (EEA), un copolymère d'acide acrylique-méthyl-éthylène(EMA), ou un copolymère d'acide méthacrylique-éthylène (EMMA).

4. Film composite selon la revendication 1, dans lequel la première couche de protection a une épaisseur d'environ 10 µm à environ 40 µm.

5. Film composite selon la revendication 1, dans lequel la couche d'étoffe comprend une étoffe en coton, une étoffe en chanvre, une étoffe en laine, une étoffe en soie, une étoffe mélangée, une étoffe métissée, une étoffe non tissée, ou une étoffe en microfibre.

6. Film composite selon la revendication 1, dans lequel la couche d'étoffe a une épaisseur d'environ 100 µm à environ 2 000 µm.

7. Film composite selon la revendication 1, comprenant en outre une couche de métal entre la première couche de protection et la couche d'étoffe,
dans lequel la couche de métal comprend de l'aluminium (AI), du cuivre (Cu), du fer (Fe), du carbone (C), du chrome (Cr), du manganèse (Mn), du nickel (Ni), ou un alliage de ceux-ci.

8. Film composite selon la revendication 7, dans lequel la couche de métal comprend une feuille en métal ou un film mince en métal.

9. Film composite selon la revendication 7, dans lequel la couche de métal a une épaisseur d'environ 0,1 µm à environ 100 µm.

10. Film composite selon la revendication 7, comprenant en outre une seconde couche de protection entre la couche de métal et la couche d'étoffe.

11. Film composite selon la revendication 10, dans lequel la seconde couche de protection comprend du nylon, du polyéthylène, du polytéréphtalate d'éthylène, du polytéréphtalate de butylène, du polynaphtalate de butylène, et un dérivé de ceux-ci.

12. Procédé de fabrication d'un film composite d'un boîtier de batterie, le procédé comprenant :
la fourniture d'une première couche de protection ;
**caractérisé par**
la stratification d'une couche d'étoffe, en particulier une couche d'étoffe non tissée, sur une surface de la première couche de protection,
dans lequel la première couche de protection comprend un matériau qui est capable d'être fusionné thermiquement,
dans lequel la première couche de protection est un boîtier d'emballage interne de la batterie,
dans lequel la couche d'étoffe présente une flexibilité pour résoudre des contraintes basées sur une différence entre un coefficient de dilatation thermique de la première couche de protection et la couche d'étoffe, de façon à empêcher la première couche de protection de se fissurer, et
dans lequel la couche d'étoffe est un boîtier d'emballage externe pour fournir une interface exposée externe à un utilisateur.

13. Procédé selon la revendication 12, comprenant en outre, avant la formation de la couche d'étoffe, la formation d'une seconde couche de protection sur l'autre surface de la couche de métal,
dans lequel la couche d'étoffe est formée sur l'autre surface de la seconde couche de protection qui n'entre pas en contact avec la couche de métal.

14. Procédé selon la revendication 13, dans lequel la formation de la couche d'étoffe comprend l'application d'un adhésif sur l'autre surface de la seconde couche de protection, l'empilage de la couche d'étoffe sur celle-ci, et le séchage de la couche d'étoffe.

15. Procédé selon la revendication 12, dans lequel la couche d'étoffe est formée sur la première couche de protection ou la première couche de protection est formée sur la couche d'étoffe.
